# EUROPEAN PATENT APPLICATION

(11) **EP 4 424 991 A1**
(43) Date of publication of application: **04.09.2024**
(21) Application number: 24160802.5
(22) Date of filing: 01.03.2024
(51) Int. Cl.: F03G 3/08

(54) **SYSTEM FOR DRIVING AN ELECTRIC CURRENT GENERATOR**

(30) Priority: 01.03.2023 IT 202300003654
(71) Applicant: Onori, Mario, 00163 Rome (IT)
(72) Inventor: Onori, Mario, 00163 Rome (IT)
(74) Representative: Manna, Sara

(57) **Abstract**

The present invention relates to a system (100) for driving an electric current generator provided with rotor, comprising:
at least a flywheel (7);
a track (2) provided with racks and a carriage (1) comprising wheels configured to roll on the rails;
a pulley (5) comprising a pinion (6) integral with it and configured to roll on one of the racks (21);
a first mechanical transmission member (4) respectively engaged with the axis of a pair of wheels and with the pulley (5), so as to transmit the motion from the wheels to the pulley (5) when the carriage (1) is moving on the tracks;
mechanical transmission means (4) suitable for transmitting the motion from the pulley (5) to the flywheel (7);
a second mechanical transmission member (4) engaged with the flywheel (7) and with the generator (1), suitable to transmit the motion from the flywheel (7) to the rotor in order to generate electric current.

## Description

### Technical field of the invention

The present invention relates to a mechanical system suitable for putting in rotation the rotoric stadium of an electric current generator, such as for example an alternator.

### Background

Currently, several types of mechanisms and machines devised to cause or favour the rotation of the rotor of electric generators are widespread.

Generally, such machines and driving mechanisms are devised to promote the exploitation (or recovery) of kinetic energy by transforming it into mechanical energy, which in turn is intended to be converted into electric energy.

The main problem felt in this field is the high complexity in planning and implementing such devices, involving high costs of construction, implementation and maintenance. Moreover, often they are suffering from important losses and then result to be very expensive in energy terms.

### Summary of the invention

The technical problem placed and solved by the present invention is to provide a system allowing to obviate the drawbacks mentioned above with reference to the known art, as defined in the independent claim 1.

Preferred features of the present invention are set forth in the dependent claims.

The present invention provides a system comprising a mechanism for driving an electric generator, suitable to put in rotation a pulley by means of carriage which slides on a track provided with two rails, and to transfer the mechanical energy from the pulley to one or more flywheels for accumulating kinetic energy and, in the end, from one or more flywheels to the rotor of the generator.

The mechanism further comprises an actuation device of the track which causes the inclination thereof, so that the carriage moves along the track by gravity. The system is configured so that the carriage always advances downhill and travels along the track alternatively in the two possible directions of advancement: first of all downhill as far as the end-of-stroke corresponding to a first terminal end of the track, according to a first inclination of the track, for example clockwise, then to go back still downhill as far as the end-of-stroke corresponding to a second terminal end of the track, according to a second inclination of the track, for example counterclockwise.

According to an aspect of the invention, there is a first pulley connected to the carriage. For example, the pulley is connected to the first end of a connecting rod which in turn is connected, at a second end opposite to the first one, to an axis supported by a pair of wheels of the carriage. The connecting rod at each one of the two ends has a bearing, to allow the rotation of the pulley and of the axis of the wheels. Therefore, the wheels of the carriage result to be free to rotate independently from the pulley.

According to an aspect of the invention, the axis connected to the pulley at each one of its terminal ends carries a flywheel, so that a flywheel is arranged at each wheel of the pair.

Advantageously, the pulley is provided with two lateral pinions configured to engage on rack obtained on the rails. In this way, even the pulley is constrained to roll along the track, and the configuration of the system results to be more stable. Moreover, the rack preferably has a closed annular configuration, to allow the rotation of the pulley and of the flywheel associated thereto still according to the same direction, despite the change in direction of advancement of the carriage along the track.

Other advantages, features and use modes of the present invention will result evident from the following detailed description of some embodiments, shown by way of example and not for limitative purposes.

### Brief description of the figures

The enclosed Figures will be referred to, wherein:
- Figure 1 shows a schematic lateral view of a first embodiment of the system according to the present invention;
- Figure 2 shows an enlarged detail of Figure 1;
- Figures 3 to 5 show respectively a sequence for moving the carriage comprised in the system of the invention, according to an additional preferred embodiment wherein the actuation device is of magnetic type;
- Figures 6 to 11 show in detail the sequence for moving the pinion of the rack during the reciprocating motion of the carriage;
- Figures 12 to 14 show respectively a sequence for moving the carriage comprised in the system of the invention, according to still an additional preferred embodiment;
- Figure 15 shows a perspective schematic view of a portion of pulley according to a preferred embodiment of the system of the present invention;
- Figure 16 shows a perspective schematic view of a wheel of the carriage according to a preferred embodiment of the system of the present invention;
- Figures 17 to 21 show a preferred embodiment of a sequence for moving counterweight elements referred to different positions of the carriage;
- Figure 22 shows a preferred embodiment of the carriage engaged to slide on the track according to the present invention; and
- Figure 23 shows a detail of Figure 22, referred to the pinions of a pulley engaged with respective racks according to a preferred embodiment of the system of the present invention.

The above-mentioned Figures are to be meant exclusively by way of examples and not for limitative purposes.

### Detailed description of preferred embodiments

The present invention relates to a system comprising a carriage sliding along a track, and a mechanism comprising a pulley and one or more flywheels for driving an electric generator having a rotor. The mechanism allows to transfer mechanical energy from the pulley to the flywheels and at last to the rotor of the generator, so that electric current is produced.

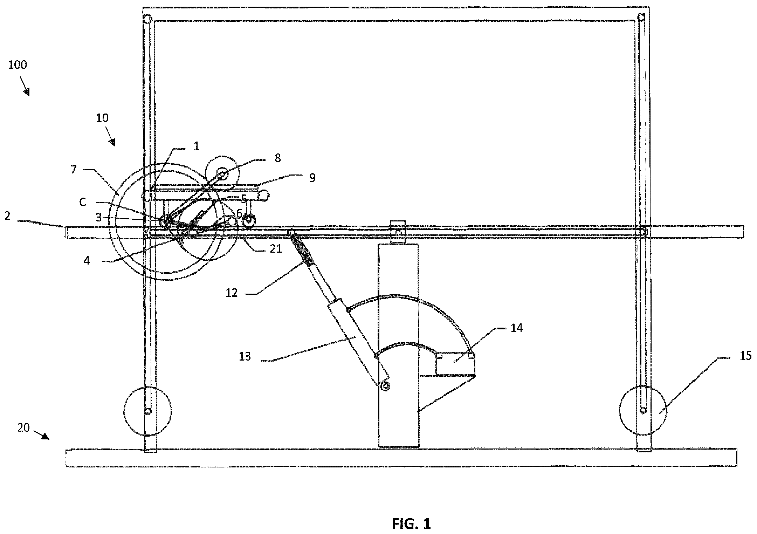

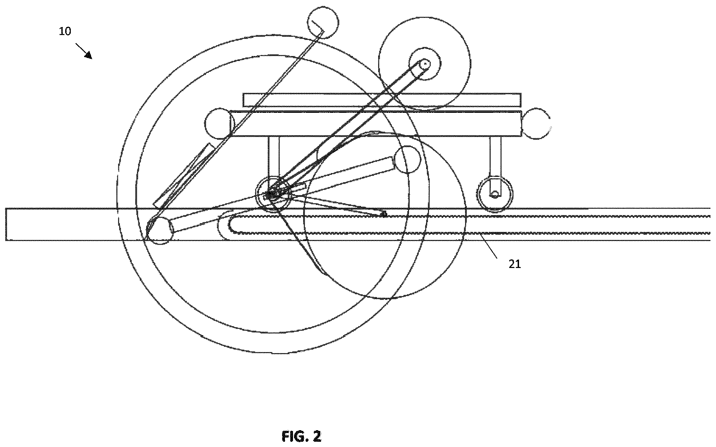

With reference to Figure 1 and to the representation in greater detail of Figure 2, a first preferred embodiment of the system of the invention, designated with the reference number 100, includes the carriage 1 and the mechanism 10. The carriage 1 drags in rotation the pulley 5 during its sliding motion along the track 2. The pulley 5 is connected to at least a flywheel 7 for accumulating kinetic energy by suitable means and mechanical components for transmitting the motion. The transmission is such that the number of revolutions of the flywheel, in the time unit, is higher than the number of revolutions of the pulley. The used transmission means can be for example belts or chains.

The carriage 1 comprises one or more pairs of wheels configured to roll along the track 2, wherein a pair carries an axis supported by both wheels of the pair by means of suitable bearings. Such axis then is free to rotate with respect to the respective wheels, for the reasons which will be illustrated hereinafter. Preferably, the carriage 1 carries a front pair and a rear pair of wheels configured to roll on the rails.

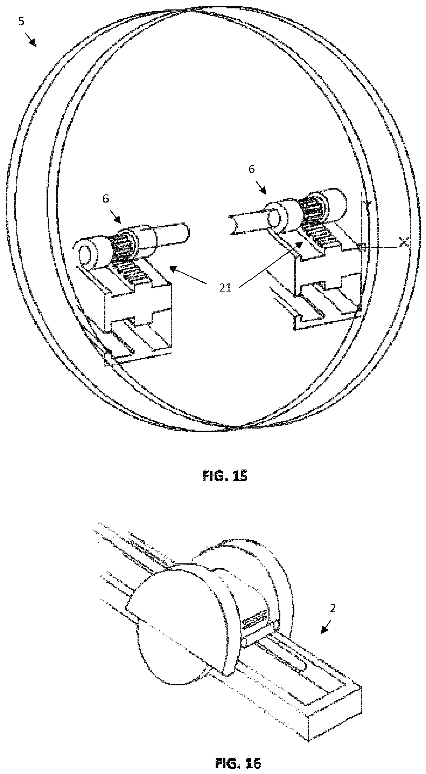

A detail of a wheel of the carriage 1 is shown in Figure 16.

The carriage 1 can be advantageously provided with a ballast 9, which with its mass helps or causes of the carriage 1 to slide along the track 2 by gravity, when the track 2 is inclined. Moreover, the ballast 9 helps to keep the carriage 1 in position, in contact on the track 2, during its sliding.

The track 2 has preferably a rectilinear longitudinal development, and includes two rails preferably parallel therebetween. On at least one of the rails at least a rack 21 is obtained or applied. Preferably, on each one of the rails a rack 21 is obtained or applied, so as to obtain a pair of racks 21 running parallelly to said rails. Preferably, (the only or) each rack 21 is obtained on an internal lateral surface of one of the two rails, so that the two racks 21 are facing with respect to each other, inside the track 2. Alternatively, the rack 21 is obtained on a respective upper base surface of the track 2. The (or each) rack 21 has preferably a closed annular configuration, as it will be better explained hereinafter.

The mechanism comprises at least a pulley 5, which can be a magnetic pulley. Preferably, the pulley 5 is arranged in central position with respect to the carriage 1, according to a top view, with rotation axis orthogonal with respect to the longitudinal development direction of the track 2, still according to top view. The pulley 5 is kinetically connected to the carriage 1, for example by means of a connecting rod further connected to the axis associated to a pair of wheels of the carriage 1. According to such implementation, the pulley 5 is connected to the first end of a connecting rod 30 which in turn is connected, at a second end opposite to the first one, to the axis. The connecting rod 30 at each one of the two ends has a bearing, to allow the rotation both of the pulley and of the axis of the wheels connected thereto.

The pulley 5 is further shaped to carry a main body provided with a circular main surface (or face) comprising at least a pinion 6 integral with it, protruding orthogonally with respect to such circular main surface. The mechanism assembly configuration is such that the pinion 6 is engaged to roll on a respective rack 21, so that the pulley 5 results to be in internal position with respect to the rails of the track 2.

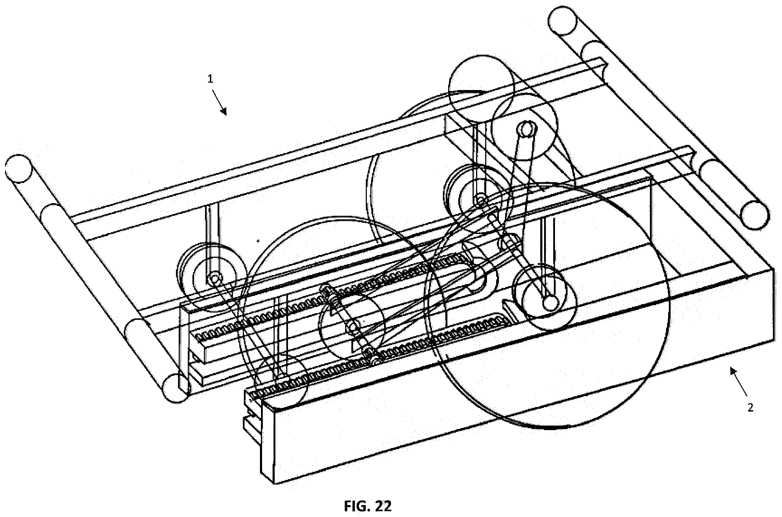

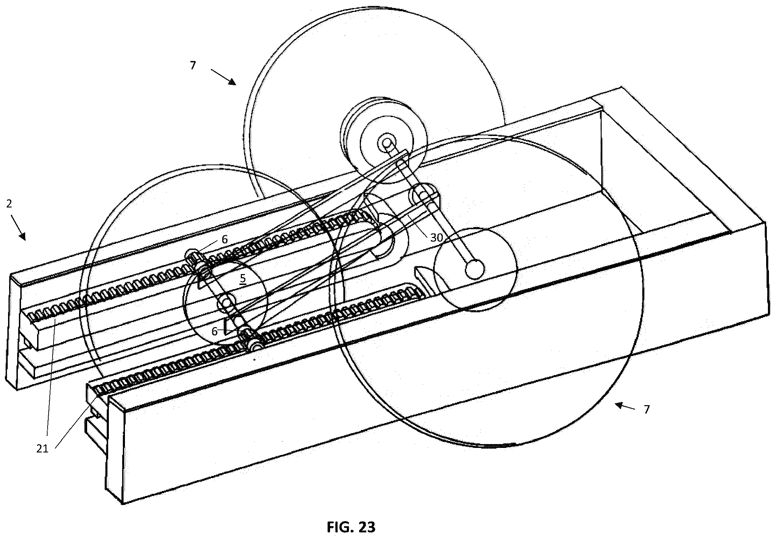

A preferred representation of the rolling motion of the pinion 6 of the pulley 5 on the rack 21 is shown in Figure 22, and still more clearly in the detail of Figure 23.

According to the herein represented embodiment, the pulley 5 comprises two pinions 6 integral with it and preferably identical, each one protruding orthogonally with respect to the above-mentioned circular main surface. Such pinions 6 are symmetrical with respect to the main body of the pulley 5, and arranged so as to protrude along the rotation axis of the pulley 5 itself. The mechanism assembly configuration is such that each pinion 6 is engaged to roll on a respective rack 21, where each rail comprises a rack 21. The preferably identical racks 21, are facing to each other inside the track 2, and obtained in particular on the internal lateral surface of the rails.

Each rack 21 has an overall closed annular development along the internal lateral surface of the rails of the track 2. In other words, the rack 21 provides two horizontal portions which develop according to a direction parallel to that of the track 2 itself, respectively a lower and an upper portion, and two curved lateral portions connecting the horizontal portions. Such closed annular path implements a rolling guide of the pinion 6 which, during the reciprocating motion of the carriage from an initial end to a final end of the track 2, moves always according to the same rolling direction. For example, the pinion 6 rolls along the lower portion when the carriage moves from the initial end to the final end, then goes back along the curved portion when the carriage 1 reverses the direction of travel and continues to roll along the upper portion when the carriage 1 moves from the final end to the initial end of the track. Obviously, the rolling direction of the pulley 5 integral to the 6 is the same.

According to the above-mentioned embodiments of the invention, the pulley 5 is engaged on the rack (or on the racks) 21 so as to roll on an upper or lower portion of the rack itself (or of the racks themselves) respectively at a back and forth motion of the carriage 1 on the track 2. The mechanism is configured so that the pulley 5 rotates always in the same direction, despite the carriage 1 changes direction of advancement along the track 2. Therefore, even the flywheel (or the flywheels) 7 connected to the pulley 5 by respective motion transmission means rotate(s) always in the same direction, despite the carriage 1 changes direction of advancement along the track 2.

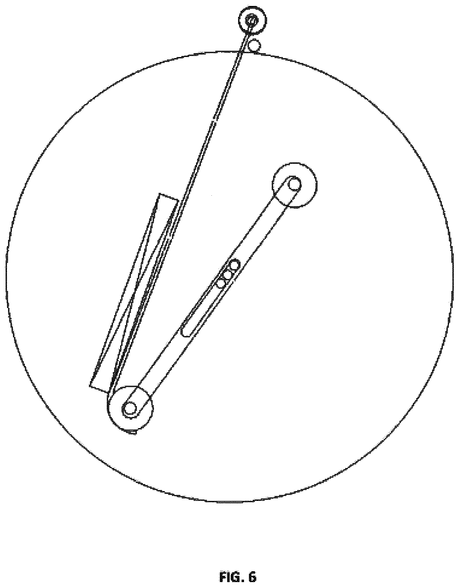

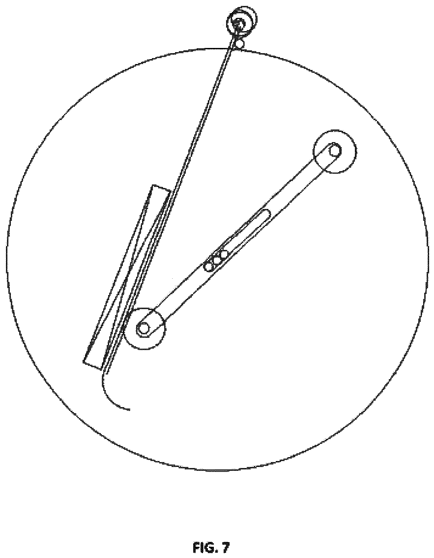

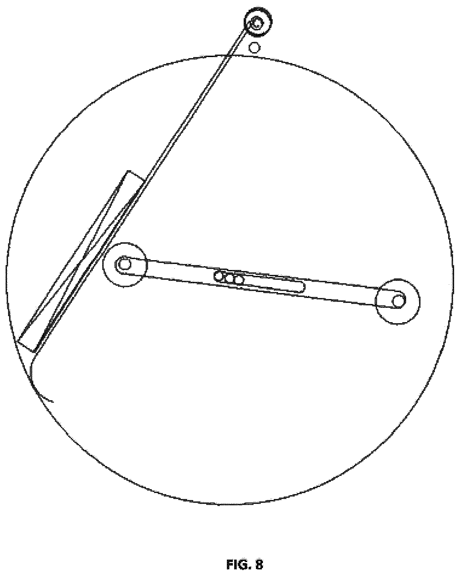

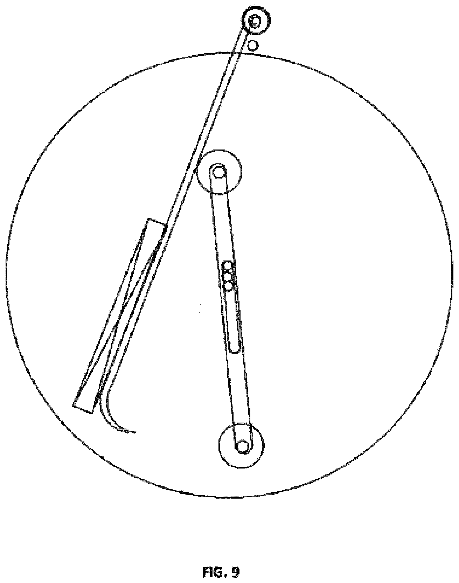

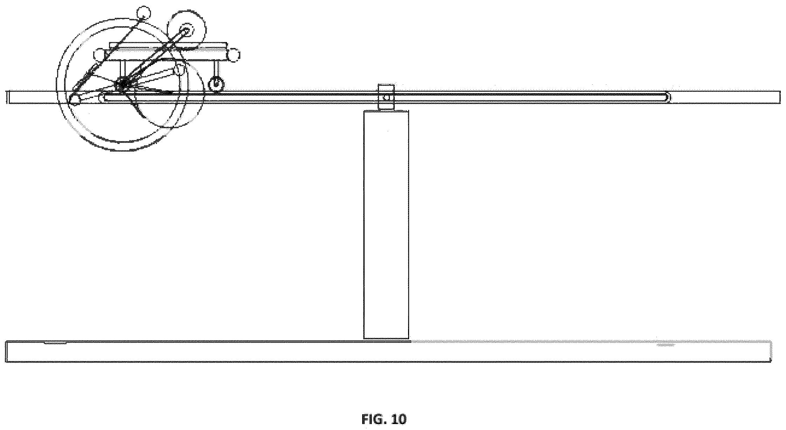

An example of the sequence for moving the pinion 6 on the rack 21 during the reciprocating motion of the carriage 1 along the track 2 is shown in Figures 6 to 11.

According to an additional preferred embodiment of the invention, the mechanism comprises two pulleys 5, preferably arranged specularly with respect to a longitudinal axis of symmetry of the track 2 according to a top view of the latter, wherein each pulley 5 comprises a pinion 6 integral with it, and protruding orthogonally with respect to the respective circular main surface. The mechanism assembly configuration is such that each pinion 6 is configured to roll on a respective rack 21, according to what already described, so that both pulleys result to be in position inside the rails of the track 2, as shown in Figure 15.

Alternatively, the two pulleys 5 are arranged aligned inside the track 2, along the longitudinal axis of symmetry of the track 2, and preferably each pulley 5 comprises a pair of pinions 6 integral with it, and protruding orthogonally with respect to its circular main surface. The mechanism assembly configuration is such that each pinion 6 is configured to roll on a respective rack 21 obtained on the internal lateral surface of the rails so that the rolling direction of the pulleys 5 remains unchanged as the direction of advancement of the carriage along the track 2 varies, according to what already described. In particular, the pinions 6 of the two pulleys 5 facing on the same rail are engaged with the same rack 21. Therefore, each rail comprises one single rack 21.

Preferably, the second pulley 5 has a smaller diameter than the first pulley 5. According to such configuration, the pulley with larger diameter comprises a system for balancing the weights equipped with springs, configured to push the masses (suitable arranged small weights) alternatively forward and backward with the purpose of favouring each time the descending motion of the carriage according to the force of gravity.

The mechanism then provides mechanical transmission means 4 engaged with the pulley 5 and with at least a flywheel 7, in order to put the latter in rotation depending upon the rotation of the pulley 5.

As anticipated, the direction of rotation of the pulley and of the flywheel (or of the pulleys and of the flywheels) during the forward motion of the carriage 1 along the track 2 is the same direction of rotation existing even during the return motion of the carriage, and it never varies.

Additional mechanical transmission means 4 is engaged respectively with the flywheel 7 and with the generator, so as to transmit the motion from the flywheel 7 to the rotor and to obtain, in the end, the production of electric energy. The used transmission means can be for example belts or chains.

Preferably, when there is one single flywheel 7, this is arranged in central position with respect to the carriage 1, according to a top view.

According to embodiments of the system which comprise two pulleys, the mechanical transmission means 4 comprises a transmission member 4 respectively engaged with the first pulley 5 and the second pulley 5, the latter being connected to the flywheel 7 by another transmission member 4.

According to alternative embodiments of the invention, the system comprises two flywheels 7, wherein each flywheel 7 is arranged in a laterally spaced position with respect to a respective wheel of a same pair of wheels of the carriage 1, externally with respect to the rails. The flywheels 7 are integral with the axis of the pair of wheels of the carriage connected to the pulley 5, as previously described, which axis is supported by the wheels but free to rotate independently with respect to the latter. Such axis protrudes externally with respect to the wheels which support it and at each one of its terminal ends carries a flywheel 7, so that a flywheel 7 is arranged at each wheel of the pair.

Each one of the two flywheels 7 is connected to the respective first or second pulley 5 by means of respective transmission members 4. In Figure 1, the mass centre of the flywheels is designated with C.

According to preferred embodiments, the motion of the carriage 1 by gravity can be implemented by means of a suitably arranged actuation device 20, configured to move suitably the track 2. The motion of the track 2 mainly consists in its rotation with respect to a fulcrum, so that the inclination of the rails causes the carriage 1 to slide by gravity, and then the pulley 5 to rotate.

The fulcrum is included in a bearing structure which supports the actuation device itself and preferably is integral with the latter. The fulcrum is preferably arranged in central position with respect to the track 2, so that the length of the lateral track portions with respect to the fulcrum is the same, along the longitudinal direction development of the track. Therefore, hereinafter it could be referred to also as 'central fulcrum'. Preferably, the track 2 is supported by a system of levers, and/or articulated arms, and/or springs, configured to guide the above-mentioned inclination of the track 2.

Such actuation device 20 can exploit a hydraulic piston, or a system of magnets suitably positioned to generate attraction-repulsion magnetic forces suitable to cause the rotation of the track with respect to the fulcrum.

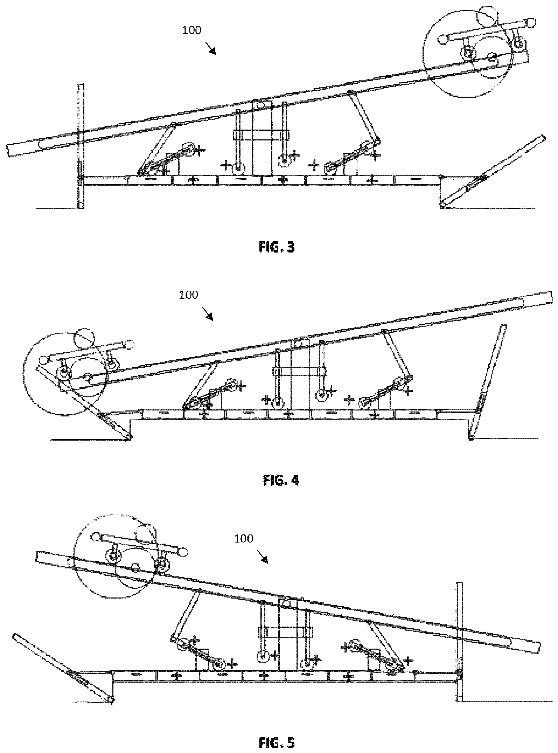

Figures 3 to 5 show a preferred embodiment of an actuation device 20 of magnetic type, which provides a first and a second articulated arm respectively connected to a lower portion of the track, preferably arranged in position equidistant from the central fulcrum of the track. Such arms have both a first, preferably rectilinear, member arranged horizontally and tilting with respect to a fixed fulcrum, so as to be able to come in contact with a lower resting portion thereto the fulcrum is constrained. The articulated arms comprise an additional second hinged member, at its own first terminal end, to the terminal end of the first member farest from the central fulcrum, and additionally hinged at its own second terminal end to the lower portion of the track.

As to the first arm, the respective first member at each terminal end carries a magnet, having for example positive charge. The resting portion in turn carries a magnet having positive charge at a terminal end of the first member, and a magnet having negative charge at the remaining terminal end of the first member, which for example is the one farest from the central fulcrum.

As to the second arm, the respective first member at each terminal end carries a magnet, having for example positive charge. The resting portion, in turns, carries a magnet having positive charge at a terminal end of the first member, and a magnet having negative charge at the remaining terminal end of the first member, which for example is the one nearest to the central fulcrum.

Moreover, a pair of rods can be provided, respectively connected to a lower portion of the track, preferably arranged in position equidistant from the central fulcrum of the track. Such rods are arranged vertically and connected to the track at its own first upper terminal end. Both rods carry a magnet, for example with positive charge, at its own lower terminal end. The resting portion in turn carries a magnet having positive charge at the terminal end of the rod nearest to the second arm, and a magnet having negative charge at the terminal end of the rod nearest to the first arm.

According to such embodiment, the motion of the carriage along the track causes the rotation of the track with respect to the fulcrum and the motion of the articulated arms and of the rods carrying the magnets, and then it generates proportional attraction-repulsion forces as the distance of the magnets carried on the rods/arms and on the resting portion varies. The configuration is such that the magnetic forces allow to trigger further subsequent inclinations or oscillations of the track with respect to the fulcrum, and to maintain the reciprocating motion of the carriage.

More specifically, the actuation device 20 is configured to cause, in a first phase, a rotation of the track 2 with respect to a resting position, wherein the track 2 is parallel to the walking plane or resting plane of the system 100, until reaching a first maximum inclined position clockwise (or counterclockwise). Once reached such position, the actuation device 20 causes a reversal of the direction of rotation of the track 2, which then is inclined this time counterclockwise (or clockwise), until reaching a second maximum inclined position. Once reached such position, the cycle re-starts, and the direction of rotation of the track 2 is again reversed. The rotation of the track 2 ceased when the actuation device 20 is deactivated. The rotation of the track 2 causes the translation of the carriage 1 along the latter, caused by the rolling of the wheels on the rails. Such rotation generates the mechanical energy which is used, in the end, for the production of electric energy by the generator, going from the pulley(s) and from the flywheel(s).

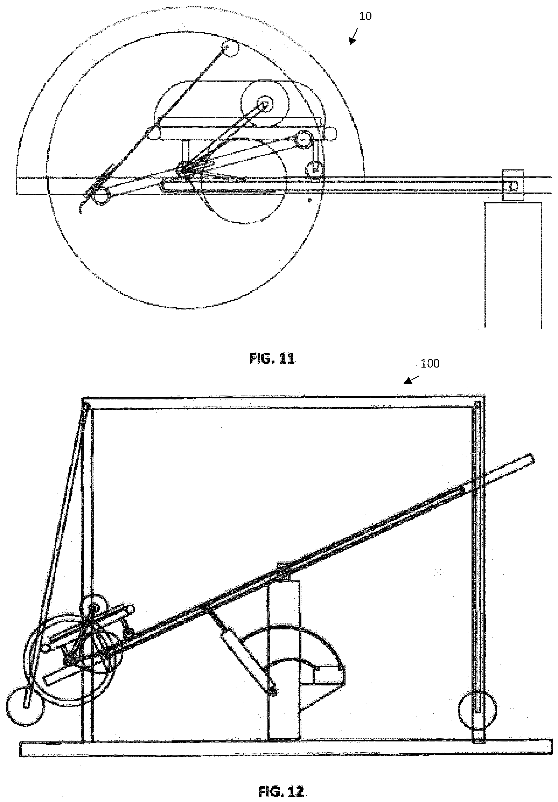

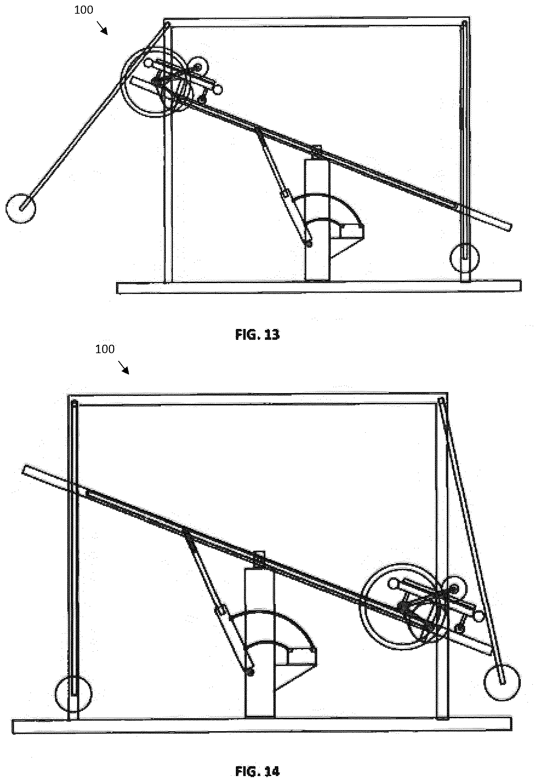

According to the alternative shown in Figures 12 to 14, the actuation device 20 comprises a hydraulic cylinder, actuated by a hydraulic pump 14. As anticipated, the track 2 is hinged with respect to a fulcrum, such as a support preferably placed in central position with respect thereto, equidistant with respect to its terminal ends, so as to result tilting with respect to such fulcrum.

The cylinder includes a piston 13 connected to the track 2 by a hinge, so that, when the actuation device 20 is activated, the reciprocating motion of the piston 13 causes the rotation of the track 2 with respect to the fulcrum and to the support.

The piston 13 can be a double-effect piston which inside thereof houses an energy recovery spring.

Figures 12 to 14 show some sequences representing the cycle for moving the track 2. Starting from the resting position, the track 2 rotates clockwise, as far as reaching a first predetermined maximum inclined position. The rotation is caused by the activation of the actuation device 20, in the specific case corresponding to a first phase of the reciprocating motion of the piston 13. The first inclined position can correspond to the wholly extracted piston 13. The constraint to the inclination obtainable by the track 2 can be determined by the presence of a system of suitably configured levers, by stops, or by the end-of-stroke of the wholly extracted piston 13. Once reached the maximum inclination, the actuation device 20 is configured to make the track 2 to rotate according to a direction opposite to the preceding one, so as to bring it back to the resting position, and then to make it to continue its rotation as far as reaching a second predetermined maximum inclined position. The second inclined position can correspond to the wholly retracted piston 13. Once reached such position, the cycle is repeated, with the continuation of the reciprocating motion of the piston 13.

The rotation of the track 2 corresponds to a sliding of the carriage 1 by gravity each time the track 2 is inclined with respect to the resting position. The configuration of the system is such that the carriage 1 slides along the track 2 in a direction of travel or in the other one, each time, as long as the actuation device 20 causing the rotation of the track 2 is active.

The system can further comprise one or more counterweight elements 15 configured to move during the motion of the carriage 1 so as to balance the masses moved during the rotation of the track 2 - such as for example at least the mass of the track 2 itself, the mass of the carriage 1 which slides along the track 2, as well as the masses of the pulley(s) and of the flywheel(s) and of the provided members and means 4 for transmitting the motion - and preferably to adjust the sliding speed of the carriage 1. The counterweights 15 are configured to move and generate pushes so as to help the actuation device 20 in causing the inclination of the track 2.

Such counterweight elements 15 preferably are two and comprise masses carried on at least one of the terminal ends of two rods revolvingly connected to the system, for example hinged in opposite positions with respect to the already mentioned bearing structure of the actuation device. The counterweight elements 15 preferably are arranged at lateral terminal ends of the bearing structure so as to result to be arranged laterally externally, in longitudinal direction, with respect to the track.

According to such implementation, each one of the two rods carrying the masses has a sliding surface configured to abut on and guide a respective roller connected to an upper terminal end of the carriage. According to such variant, in fact, the carriage has two rollers, each one at a portion of upper longitudinal terminal end, installed in order to be able to rotate freely with respect to the carriage itself. The system is configured so that, during the motion of the carriage, alternatively one of the two rollers comes in contact with the sliding surface of the rod nearest thereto so that the motion of the carriage is guided and controlled by such coupling.

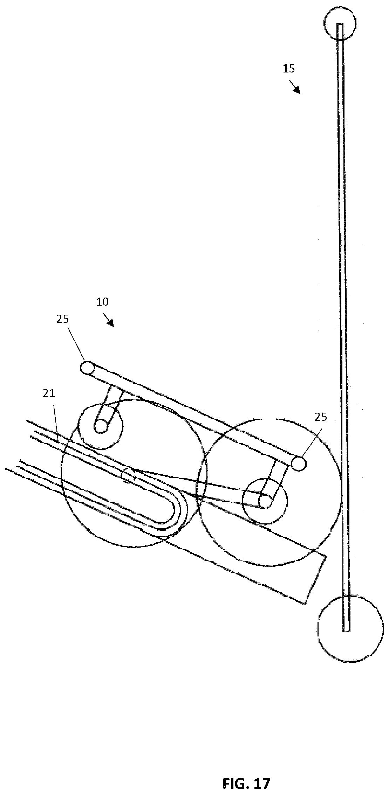

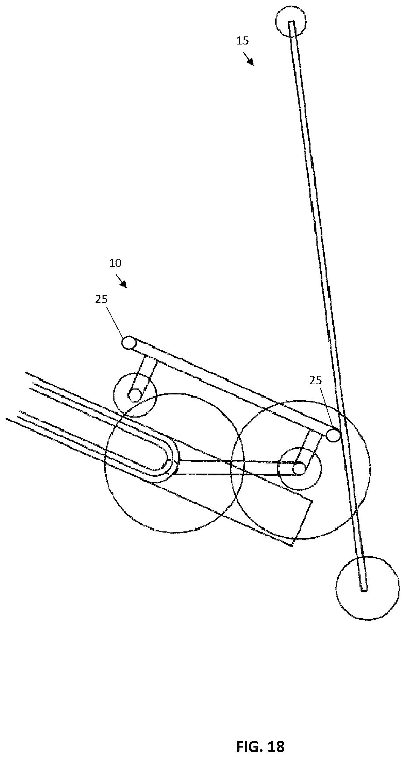

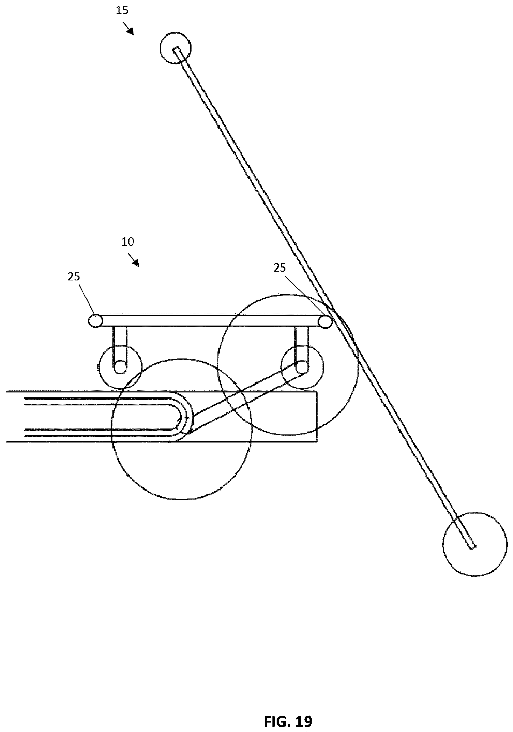

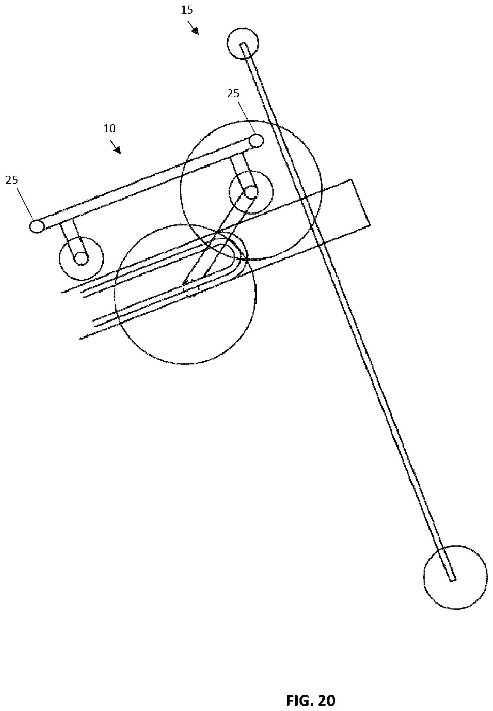

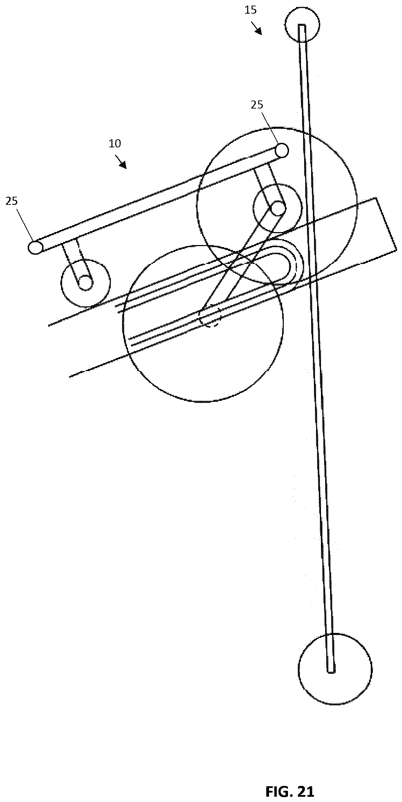

Figures 17 to 21 show a preferred embodiment of a sequence for moving the two counterweight elements 15, referred to different positions of the carriage 1.

In particular, the two counterweight elements 15, preferably diametrally opposite with respect to the central fulcrum with respect thereto the track can rotate, move according to a "scissor" motion, that is like the blades of a scissor which spread up as far as reaching a maximum opening position (for example during the sliding of the carriage forward along the track or forward motion), to then reverse the direction of rotation and join up to a minimum opening position (for example during the sliding of the carriage backward along the track, or return motion), to then reverse again the direction of rotation and so on until when the carriage continues its back-and-forth (forward/return) motion along the track.

In preferred embodiments, while the carriage 1 slides, the counterweight elements 15 move alternatively up and down, according to the oscillating motion of their own rods, and are configured to help pushing the pulley 5 towards the central portion of the system 100.

In other words, according to a preferred variant, the counterweight elements act by moving as pendulums, by oscillating or rotating in a cyclical-recurrent manner with respect to a fixed fulcrum (ex. scissor motion), for example fixed with respect to the bearing structure of the actuation device. The motion of pendolums transfers the pushing force of the actuation device, both hydraulic or magnetic attraction device, through the rollers of the carriage, by accelerating for example the descending speed of the carriage along the inclined track.

Moreover, it is noted that the motion transmission mechanisms can be arranged inside the carriage 1, for example at the central pulley which, when operating, can rotate even at 300/400 revolutions. Alternatively, according to preferred embodiments, they could be arranged at the two external flywheels which, when operating, rotate at high speeds, such as 700-800 revolutions per minute.

The present invention has been sofar described with reference to preferred embodiments. It is to be meant that other embodiments belonging to the same inventive core may exist, as defined by the protective scope of the herebelow reported claims.

## Claims

1. A system (100) for driving an electric current generator provided with a rotor, comprising:
at least a flywheel (7);
a track (2) having a first terminal end and a second terminal end and comprising two rails, said track (2) being configured to be hinged at a fulcrum,
wherein one of said rails comprises a rack (21) with closed annular development, preferably obtained on an internal lateral surface of one of the two rails;
a carriage (1) comprising a front pair and a rear pair of wheels configured to roll on said rails, said carriage (1) being configured to move alternatively along the track (2) according to a first direction of advancement from said first terminal end to said second terminal end, and according to a second direction of advancement opposite to the first one, from said second terminal end to said first terminal end;
a first pulley (5) having a circular main surface, and comprising at least a pinion (6) integral with it, protruding orthogonally with respect to said circular main surface,
wherein said pinion (6) is engaged to roll on said rack (21);
a connecting rod (30) respectively engaged with the axis of one of said pairs of wheels and with said first pulley (5), configured to allow a rotation of said first pulley (5) independent from the rotation of said pairs of wheels when the carriage (1) is moving along the track (2);
transmission means (4) suitable for transmitting the motion from said first pulley (5) to said flywheel (7);
transmission means (4) suitable for transmitting the motion from said flywheel (7) to the rotor of the generator,
wherein the configuration of the system (100) is such that the direction of rotation of said first pulley (5) and said flywheel (7) remains unchanged as the direction of advancement of the carriage along said track (2) varies.

2. The system (100) according to claim 1, wherein said first pulley (5) comprises two pinions (6) integral with it, protruding orthogonally with respect to said circular main surface, wherein each pinion (6) is configured in such a way to be engaged to roll on a respective rack (21), where each rail comprises a rack (21) with closed annular development.

3. The system (100) according to one of the preceding claims, wherein said pulley (5) is arranged in an internal position with respect to the rails of said track (2), and preferably in central position with respect to said carriage (1), according to a top view of said system (100).

4. The system (100) according to one of the preceding claims, comprising two flywheels (7) integral to said axis of one of said pairs of wheels of the carriage (1), each one arranged in a laterally spaced position with respect to a respective wheel of said pair of wheels, externally with respect to said rails, wherein said two flywheels are connected to the first pulley (5) by means of respective transmission members (4).

5. The system (100) according to one of the preceding claims comprising an actuation device (20) configured to incline said track (2) in such a way as to cause said carriage (1) to slide along it by gravity.

6. The system (100) according to the preceding claim, wherein said device (20) comprises a hydraulic cylinder provided with a piston (13) connected to said track (2) and which can be driven according to a reciprocating motion, wherein:
when the piston (13) is in a fully retracted position, said track (2) has a first inclined position;
when the piston (13) is in a wholly extracted position, said track (2) has a second inclined position;
the configuration being such that the passage from said first to said second inclined position corresponds to a rotation of the track (2) with respect to the fulcrum.

7. The system (100) according to one of the preceding claims, comprising a plurality of counterweight elements (15) configured to move according to a scissor motion wherein: they spread up to a maximum opening position during the motion of said carriage (1) according to the first direction of advancement along the track (2), to then reverse the direction of rotation and join up to a minimum opening position during the motion of said carriage (1) according to the second direction of advancement along the track (2).

8. The system (100) according to the preceding claim, wherein each counterweight element (15) comprises a rod carrying a mass at least at one of its terminal ends, wherein the rod has a sliding surface configured to guide a respective roller connected to an upper terminal end of said carriage (1).
